Europäisches Patentamt

European Patent Office

Office européen des brevets

(11) Publication number: **0 153 631 B1**

# EUROPEAN PATENT SPECIFICATION

(45) Date of publication of patent specification: **19.06.91**   (51) Int. Cl.⁵: **B01D 1/00, C23G 5/04**

(21) Application number: **85101317.7**

(22) Date of filing: **07.02.85**

(54) **Vapor generating and recovery process for vapor retention recovery and reuse.**

(30) Priority: **21.02.84 US 581545**

(43) Date of publication of application:
**04.09.85 Bulletin 85/36**

(45) Publication of the grant of the patent:
**19.06.91 Bulletin 91/25**

(84) Designated Contracting States:
**CH DE FR GB IT LI NL SE**

(56) References cited:
**EP-A- 0 055 414      EP-A- 0 145 975**
**DE-A- 1 947 070      DE-A- 1 956 854**
**US-A- 3 121 680      US-A- 3 456 331**
**US-A- 3 498 885**

(73) Proprietor: **McCord, James W.**
**9101 Nottingham Pwy**
**Louisville, Kentucky(US)**

(72) Inventor: **Hoppestad, Lamont I.**
**10802 Bell Rock Court**
**Louisville Kentucky 40243(US)**
Inventor: **Ruckriegel, Michael J.**
**410 Westwood Drive**
**Middletown Kentucky 40243(US)**

(74) Representative: **Patentanwälte Grünecker,**
**Kinkeldey, Stockmair & Partner**
**Maximilianstrasse 58**
**W-8000 München 22(DE)**

## Description

The invention relates to a method for vaporizing a liquid and condensing the vapor comprising the features as indicated in the precharacterizing part of claim 1.

In such a prior art method (US-A-3,498,885), a heating chamber including an electrical heater which is surrounded by a heating bath with an aqueous solution and a vaporizing chamber which is located above the heating chamber, separated from one another by means of a bottom, are used, the vaporising chamber contains a liquid which will be vaporized by means of the temperature provided by the heating chamber. Objects to be surface treated will be immersed in the vapor of said vaporized liquid. The vapor will be recovered by means of a heat absorbing device for condensing the vaporized liquid.

In some instances, objects to be surface treated are at a sufficiently low temperature relative to the temperature of the vaporized liquid. When these relatively cold objects are immersed in the vapor, the objects initially and rapidly absorb enough heat from the treatment vapor to condense this vapor to a liquid. When this happens, the vapor zone collapses. The time required for revaporizing the liquid is lost to the treatment process, thereby extending the time required to complete the treatment operation. This lost time increases costs, particularly when the treatment process is a step in a high volume manufacturing operation.

From US-A-3,947,240, a vapor generating and recovery apparatus for soldering, fusing or brazing objects is known, having an open-topped vessel with a pool of liquified metal in the bottom of the vessel. The metal is heated in order to vaporize a liquid mixture of two components. As the liquid has a density less than the density of the molten pool, the liquid floats or forms a stratified layer on the top of the molten pool and is maintained at a continuous boil by the heat of the molten pool. The two components of the liquid have different boiling points and two cooling coils are disposed at the top of the vessel in order to recover the vapors of both components. Secondary vapor forms in the vessel a barrier between primary vapor and atmosphere to prevent, or minimize, the loss of primary vapor to the atmosphere.

It is the object of the invention to improve a method as indicated in the precharacterizing part of claim 1, such that treatment of objects requires a shorter time period.

In accordance with the invention, this object is solved by the features claimed in the characterizing part of claim 1.

In the inventive method, a thermal mass will be heated to a temperature such that a liquid coming in contact with the top surface of the thermal mass will immediately vaporize. As a result, the top surface of the thermal mass is not covered by the liquid.

Further developments of the invention are claimed in the subclaims.

A preferred embodiment of the invention will be explained in accordance with the drawing, in which :

FIGURE 1 is a schematic representation, partially broken away, of an advantageous embodiment of a vapor generating and recovery apparatus of the present invention;

FIGURE 2 is a schematic representation, partially broken away, of another advantageous embodiment of a vapor generating and recovery apparatus of the present invention;

FIGURE 3 is a schematic representation, partially broken away, of still a further advantageous embodiment of a vapor generating and recovery apparatus of the present invention; and,

FIGURE 4 is a view of a vapor generating and recovery apparatus similar to that of Figure 3 and illustrating an additional feature.

## DESCRIPTION

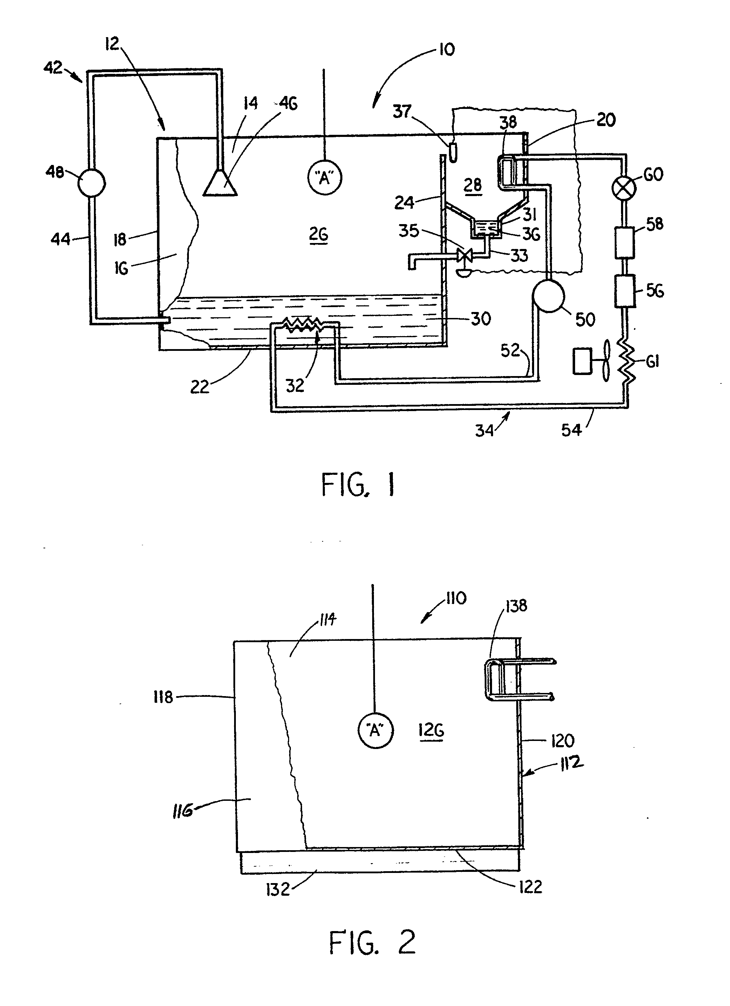

Figures 1-3 each illustrate a vapor generating and recovery apparatus, generally denoted as the number 10, 110 and 210 respectively, for vaporizing and recovering a treating liquid. The apparatus can be used, for example, for cleaning objects of oil, grease, wax or particulate matter, or for heat treating an object for shock testing or metal reflow. These examples, however, are given only by way of illustrating some end uses of the apparatus and are not to be considered in any way as limitations of the preferred embodiments. For this reason, the apparatus has virtually endless applications, and the composition of the liquid will, of course, depend upon a particular end use.

Figure 1 illustrates a vapor generating and recovery apparatus 10 including a housing 12 having spaced apart side walls 14 and 16, spaced apart end walls 18 and 20, and a floor 22. A partition wall 24 is located in the interior of the housing 12 between the end walls 18 and 20 spanning the distance between the side walls 14 and 16, thus, dividing the housing 12 interior into a liquid vaporizing chamber 26 and a vapor condensing chamber 28.

A liquid thermal mass 30 is disposed within the liquid vaporizing chamber 26 and forms a pool to a predetermined depth covering the floor 22 of the vaporizing chamber 26. The liquid thermal mass 30 can be, for example, an eutectic metal having an eutectic point, i.e. its lowest melting temperature, lower than the vaporizing temperature of the liquid to be vaporized. Other liquid thermal masses 30, for example, includes silicone oils, vegetable oil, mineral oil and the like.

The apparatus 10 further includes heating means, generally denoted as the number 32, located in the vaporizing chamber 26 below the top surface of the thermal mass 30 for heating the thermal mass 30 to at least a temperature above the vapor temperature of the liquid. The heating means 32, as illustrated, comprises at least one heat emitting coil, such as, for example, a condensing coil of a refrigerant system, generally denoted as the number 34.

As shown in Figure 1, the condensing chamber 28 is formed with a condensate reservoir 31 formed in its floor 22. The condensate reservoir 31 is in liquid flow communication with the condensing chamber 26 by means of, for example, a condensate conduit 33 which transports condensate 36 from the condensate reservoir 31 to the vaporizing chamber 26 above the top surface of the thermal mass 30. The flow of condensate 36 can be controlled by means of a valve 35 located in the condensate conduit 33. The valve 35 can be activated in response to a pressure or temperature sensor 37 located in the vapor above the reservoir 31 in the condensing chamber 28.

The apparatus 10 is also illustrated as including means, generally denoted as the numeral 42, for recirculating a quantity of the thermal mass 30 in the vaporizing chamber 26 and applying the recirculated mass into the vapor above the top surface of the thermal mass 30. As shown, the thermal mass recirculating means 42 includes a conduit 44 having an inlet end in the vaporizing chamber 26 below the top surface of the thermal mass 30, and an outlet end located above the operating level of the zone of vapor in the chamber 26. A dispersion means such as, for example, a spray head 46, is attached at the outlet end of the conduit 44 to break up the recirculated thermal mass 30 exiting the conduit to disperse and direct the recirculated thermal mass 30 generally down over and through the vapor zone. A pump 48 such as, for example, a magnetic pump which uses a magnetic flux to move the thermal mass 30, is located in the conduit 44 for pumping the thermal mass 30 through the conduit 44 and out of the dispersion spray head 46. Thus, the vapor is heated from beneath by the thermal mass 30 and from above by recirculated thermal mass 30 passing downwardly through the vapor from the dispersion spray head 46.

The apparatus 10 also has a vapor condensing means, generally denoted as the number 38, located in the vapor condensing chamber 28 for cooling the vapor to a temperature below the vaporizing temperature causing it to condense in the condensing chamber. The condensing means 38 is shown as being located below the top edge of the weir 24 in the vapor zone of the vaporized liquid. The condensing means is shown as comprising at least one heat absorbing coil. As illustrated, the heat absorbing coil is a refrigerant evaporating coil of the refrigerant system 34.

By way of example, the refrigerant system 34 is shown as including a refrigerant compressor 50 for compressing a suitable refrigerant. The high pressure side of the refrigerant compressor 50 is in refrigerant flow communication with the refrigerant condensing coil 32 through a refrigerant gas conduit 52. The refrigerant evaporator coil 38 is located downstream of the refrigerant condensing coil 32 and is in refrigerant flow communication with the refrigerant condensing coil 32 through a conduit 54. A conventional refrigerant receiver 56, dryer 58 and appropriate thermal expansion valve 60 are also operatively disposed in the conduit 54 between the refrigerant condensing coil 32 and the refrigerant vaporating coil 38. A supplementary refrigerant condensing coil 61 can also be located in the conduit 54 between the refrigerant condensing coil 32 and refrigerant evaporator coil 38 to remove excess heat from the refrigerant if required.

The heating means 32 heats the thermal mass 30 in the vaporizing chamber 26 to a temperature above the vaporizing temperature of the treating liquid. The thermal mass 30, in turn, transfers heat to the treating liquid being transferred from the condensing chamber 28 to the vaporizing chamber 26 causing the treating liquid to vaporize. The relatively large surface area and high temperature of the thermal mass 30 results in rapid heat transfer from the thermal mass 30 to the treating liquid. Thus, as the treating liquid vapor may be cooled below its vaporizing temperature when objects "A" to be treated are initially immersed in the treating vapor, the treating liquid condensate will be substantially immediately reheated to its vaporizing temperature with a minimum amount of time lost to the surface treating process.

As the vapor rises from the vaporizing chamber 26, it migrates toward the vapor zone over the condensing chamber 28 whereat it is condensed by the cooling means 38 to a temperature below the vaporizing temperature of the treating liquid and is collected in the condensing chamber 28.

Figure 2 illustrates another advantageous embodiment of a vapor generating and recovery apparatus, generally denoted as the number 110, which has a number of features in common with the apparatus 10 of Figure 1.

The apparatus 110 includes a housing 112 having side walls 114 and 116, end walls 118 and 120, and a floor 122 cooperating to define a vaporizing and condensing chamber 126. Heating means 132 such as, for example, an electrical resistance heater, is located beneath and in contact with the housing floor 122. The heat energy generated by the heating means 132 transferred to the housing floor 122 and is sufficient to heat the housing floor 122 to a temperature above the vaporizing temperature of the vaporized liquid in the chamber 126. Therefore, the housing floor functions as a thermal mass.

The apparatus 110 also includes vapor condensing means such as cooling means 138 in the chamber 126 at a predetermined location above the housing floor 122 for condensing the vapor back toward the housing floor 122. The cooling means 138 can be virtually any type, for example, a cold water circulation coil or a refrigerant evaporator coil of a refrigerant systems. The cooling means 138 cools the vapor to a temperature below the vaporizing temperature causing the vapor to condense and fall back to the housing floor 122.

In operation, the heated housing floor 122 functions as a thermal mass which substantially instantaneously vaporizes any liquid which comes into contact with it, Therefore, as the condensate contacts the housing floor 122 the condensate is substantially instantaneously vaporized. The cooling means 138 condenses the rising vapors for revaporization upon contact with the thermal mass of the housing floor 122 and prevents vapors from escaping from the chamber 126. The result is that a zone of vapor is continuously maintained from the top surface of the thermal mass housing floor 122 toward the cooling means 138.

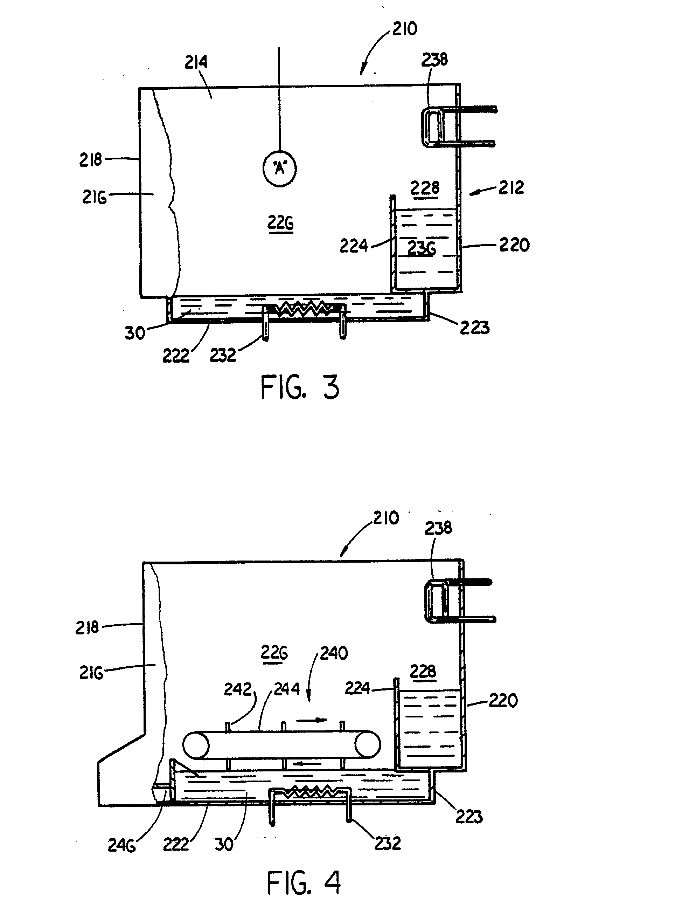

Figure 3 illustrates a further advantageous embodiment of a vapor generating and recovery apparatus 210 including a housing 212 having spaced apart side walls 214 and 216, spaced apart end walls 218 and 220, and a floor 222. A partition wall 224 is located in the interior of the housing 212 between the end walls 218 and 220 spanning the distance between the side wall 214 and 216. The partition wall 224 cooperates with the end wall 218 to define a liquid vaporizing chamber 226 therebetween and cooperates with the end wall 220 to define a vapor condensing chamber 228 therebetween. It should be noted that the partition wall 224 extends above the housing floor 222 to a predetermined height. The bottom edge of the partition wall 224 is spaced a predetermined distance above the housing floor 222, that is, the partition wall 224 does not extend to the housing floor 222. As shown, the housing floor 222 is recessed to form a reservoir 223. The reservoir 223 occupies most of the floor area in the vaporizing chamber 226 and a portion of the floor area in the condensing chamber 228.

A thermal mass 30 is located in the apparatus 210 for maintaining vaporization of the treating liquid. The thermal mass 30 covers the floor area in the vaporizing chamber 226 and at least a portion of the floor area in the condensing chamber 228. As shown, the thermal mass 30 is located in the reservoir 223. The thermal mass 30 is illustrated as being electrically heated by, for example, electric resistance coil 232 located within the thermal mass 30.

The apparatus 210 also has a vapor cooling means, generally denoted as the numeral 238, shown as being located over the vapor condensing chamber 228 above the top edge of the partition wall 224 in the zone of vapor for cooling the liquid vapor to a temperature below the vaporizing temperature and causing the vapor to condense and fall into the condensing chamber 228. The cooling means 238 comprises at least one heat absorbing coil. The heat absorbing coil can be of virtually any type, but is shown for the sake of illustration as a water cooled coil through which relatively cool water flows.

In the illustrated vapor generating and recovery apparatus 210, the partition wall 224 not only separates the vaporizing chamber 226 from the condensing chamber 228, but further functions as a weir for controlling the return of condensate from the condensing chamber 228 to the vaporizing chamber 226. The partition wall 224 is of a predetermined height such that when the level of condensate 236 in the condensing chamber 228 reaches the top edge of the partition wall 224, the condensate 236 will flow over the top edge of the partition wall 224 into vaporizing chamber 226.

The heating means 232 heats the thermal mass 30 in the vaporizing chamber 226 to a temperature above the vaporizing temperature of the treating liquid. Thus, as the treating liquid vapor may be cooled below its vaporizing temperature when objects "A" to be treated are initially immersed in the treating vapor, the treating liquid condensate will be substantially immediately reheated to its vaporizing temperature upon contact with the top surface of the thermal mass 30.

Figure 4 illustrates a vapor generating and recovery apparatus 210 substantially identical to the apparatus 210 of Figure 3 and includes the additional feature of a contaminate removal means. Contaminants from the items "A" being treated in the apparatus 210 may collect on the top surface of the thermal mass 30, and if allowed to build-up, act as an insulation reducing the heat transfer rate from the thermal mass 30 to the condensate falling back to the top surface of the thermal mass. Therefore, the apparatus 210 shown in Figure 4 embodies a contaminate removal means exemplified as skimming means, generally denoted as the numeral 240, for maintaining the top heat transfer surface of the thermal mass 30 clean and, therefore, providing for the direct heating of the vapor in the vaporizing chamber 226 as well as the substantially immediate vaporizing of any condensate falling on the top surface of the thermal mass 30. As illustrated, the skimming means 240 comprises a plurality of doctor blades 242 attached to a continuous conveyor device 244. The conveyor device 244 is located over the top surface of the thermal mass 30 in the vaporizing chamber 226 such that the tip of the doctor blades 242 on the bottom flight just penetrates the top surface of the thermal mass 30. Thus, as the bottom conveyor flight moves, it causes the doctor blades 242 to skim the contaminants from the top surface of the thermal mass 30. The doctor blades 242 move the contaminants along the top surface of the thermal mass 30 toward and into a contaminant storage bin 246 in the housing wall 218 for disposal.

The foregoing detailed description is given primarily for clearness of understanding of the preferred embodiment and no unnecessary limitations are to be understood therefrom for modifications will become obvious to those skilled in the art upon reading this disclosure.

**Claims**

1. A method for vaporizing a liquid and condensing the vapor comprising :

   heating a thermal mass to a temperature higher than the vaporizing temperature of the liquid to be vaporized ;

   contacting the thermal mass with the liquid in order to vaporize same ;

   condensing the vaporized liquid ; and

   contacting the thermal mass with the condensed liquid ;

   **CHARACTERIZED IN THAT**

   said thermal mass (30) is heated to a temperature which is sufficiently high to substantially immediately vaporize any of the liquid coming in contact therewith, whereby the top surface of the thermal mass is not covered by the liquid.

2. The method of claim 1, wherein the thermal mass is a pool of liquid.

3. The method of claim 2, wherein the liquid is an eutectic metal.

4. The method of claim 2, wherein the liquid is an oil.

5. The method of one of claims 2 to 4, further comprising the steps of :

   removing a portion of the liquid thermal mass from the pool of liquid thermal mass ; and

   passing the removed portion of the liquid thermal mass downwardly through the vaporized liquid rising from the pool of thermal mass liquid and back into the pool of thermal mass liquid.

6. The method of claim 1, wherein the thermal mass is solid.

7. The method of claim 1, further comprising the step of skimming the top surface of the thermal mass to remove contaminants therefrom.

8. A method of any of claims 1 to 7, wherein said condensing comprises :

   condensing the vaporized liquid rising from the thermal mass at an elevation above the top surface of the thermal mass.

9. A method of claim 8, wherein said condensing the vaporized liquid is performed in a condensing chamber in vapor flow communication with the vaporizing chamber ; and

   returning the condensed liquid from the condensing chamber directly to the vaporizing chamber.

**Revendications**

1. Un procédé pour vaporiser un liquide et condenser la vapeur comprenant :
   le chauffage d'une masse thermique à une température supérieure à la température de vaporisation du liquide à vaporiser,
   le contact de la masse thermique avec le liquide afin de vaporiser ce dernier,
   la condensation du liquide vaporisé, et
   le contact de la masse thermique avec le liquide condensé,

   caractérisé en ce que :
   ladite masse thermique (30) est chauffée à une température suffisamment élevée pour vaporiser immédiatement n'importe quel liquide entrant en contact avec cette dernière, la surface supérieure de la masse thermique n'étant donc pas recouverte par le liquide.

2. Le procédé de la revendication I suivant lequel la masse thermique est un liquide.

3. Le procédé de la revendication 2, suivant lequel le liquide est un métal eutectique.

4. Le procédé de la revendication 2 suivant lequel le liquide est une huile.

5. Le procédé de l'une des revendications 2 à 4 comprenant en outre les étapes suivantes : reprise d'une partie de la masse thermique liquide du volume de la masse thermique liquide, et passage de la partie de la masse thermique liquide reprise vers le bas à travers le liquide vaporisé provenant du volume de la masse thermique liquide et de retour dans le volume du liquide de la masse thermique.

6. Le procédé de la revendication I suivant lequel la masse thermique est un solide.

7. Le procédé de la revendication I comprenant en outre une étape d'écumage de la surface supérieure de la masse thermique pour en éliminer les contaminants.

8. Un procédé de l'une des revendications I à 7 suivant lequel ladite condensation comprend : la condensation du liquide vaporisé montant de la masse thermique à une certaine hauteur au-dessus de la surface supérieure de la masse thermique.

9. Un procédé de la revendication 8 suivant lequel ladite condensation du liquide vaporisé s'effectue dans une chambre de condensation en communication dans le flux de vapeur avec la chambre de vaporisation, et le retour du liquide condensé directement de la chambre de condensation vers la chambre de vaporisation.

## Ansprüche

1. Verfahren zum Verdampfen einer Flüssigkeit und zum Kondensieren des Dampfes mit den Verfahrensschritten:

   Erwärmen einer thermischen Masse auf eine Temperatur, die höher als die Verdampfungstemperatur der zu verdampfenden Flüssigkeit ist;

   Berühren der thermischen Masse mit der Flüssigkeit, um diese zu verdampfen;

   Kondensieren der verdampften Flüssigkeit, und

   Berühren der thermischen Masse mit der kondensierten Flüssigkeit;

   **dadurch gekennzeichnet, daß**

   die thermische Masse (30) auf eine Temperatur erwärmt wird, die ausreichend hoch ist, um im wesentlichen sofort jegliche mit ihr in Berührung gelangende Flüssigkeit zu verdampfen, wodurch die obere Oberfläche der thermischen Masse nicht von der Flüssigkeit bedeckt ist.

2. Verfahren nach Anspruch 1, wobei die thermische Masse ein Pool aus Flüssigkeit ist.

3. Verfahren nach Anspruch 2, wobei die Flüssigkeit ein eutektisches Metall ist.

4. Verfahren nach Anspruch 2, wobei die Flüssigkeit ein Öl ist.

5. Verfahren nach einem der Ansprüche 2 bis 4, das die weiteren Verfahrensschritte aufweist:

   Entfernen eines Teils dem flüssigen thermischen Masse aus dem Pool aus flüssiger thermischer Masse, und

   Bewegen des entfernten Teils der flüssigen thermischen Masse durch die verdampfte Flüssigkeit, die von dem Pool aus flüssiger thermischer Masse aufsteigt, nach unten und zurück in den Pool aus flüssiger thermischer Masse.

6. Verfahren nach Anspruch 1, wobei die thermische Masse fest ist.

7. Verfahren nach Anspruch 1, das weiterhin den Verfahrensschritt des Abschöpfens der oberen Oberfläche der thermischen Masse aufweist, um Verunreinigungen von ihr zu entfernen.

8. Verfahren nach einem der Ansprüche 1 bis 7, wobei das Kondensieren umfaßt:

   Kondensieren der verdampften Flüssigkeit, die von der thermischen Masse aufsteigt, in einer Höhe oberhalb der oberen Oberfläche der thermischen Masse.

9. Verfahren nach Anspruch 8, wobei das Kondensieren der verdampften Flüssigkeit in einer Kondensierungskammer durchgeführt wird, die in Dampfströmungsverbindung mit der Verdampfungskammer steht, und

Zurückführen der kondensierten Flüssigkeit aus der Kondensierungskammer unmittelbar in die Verdampfungskammer.

EP 0 153 631 B1

FIG. 1

FIG. 2

8

FIG. 3

FIG. 4